# DEMANDE DE BREVET EUROPEEN

(11) **EP 4 715 102 A1**
(43) Date de publication de la demande: **25.03.2026**
(21) Numéro de dépôt: 25203040.8
(22) Date de dépôt: 18.09.2025
(51) Int. Cl.: D04H 1/425, B32B 5/06, B32B 5/26, D04H 1/4266, D04H 1/492

(54) **PROCÉDÉ DE FABRICATION D'UN GÉOTEXTILE BIOSOURCÉ**

(30) Priorité: 19.09.2024 FR 2410002
(71) Demandeur: Occitanie Geotex, 09300 Lavelanet (FR)
(72) Inventeur: LAMEGO, Victor Manuel De Jésus, 09300 LAVELANET (FR)
(74) Mandataire: Lavoix

(57) **Abrégé**

La présente invention concerne un procédé de fabrication d'un géotextile (12), caractérisé en ce qu'il comporte : - la fourniture d'une première couche (14) d'un tissé de fibres naturelles ; - la fourniture d'une seconde couche (16) de fibres naturelles ; - la superposition de la première couche (14) sur une bande de convoyage (20), et de la seconde couche (16) sur la première couche (14) ; et l'hydroliage de la première couche (14) avec la seconde couche (16), par projection d'eau à haute pression à travers les première et seconde couches.

## Description

La présente invention concerne un procédé de fabrication d'un géotextile.

On rappellera qu'un géotextile est un textile perméable, destiné à être utilisé en contact avec un sol et/ou un autre matériau pour des applications géotechniques, par exemple des applications de drainage, de filtration, de renfort ou de séparation.

Habituellement, dans l'état de la technique, un géotextile est réalisé avec des fibres synthétiques, qui donnent à ce géotextile des caractéristiques techniques performantes pour son utilisation, notamment une bonne résistance à la traction, une faible perméabilité normale au plan, et une bonne perforation dynamique.

Il est toutefois à noter que les fibres synthétiques peuvent poser des problématiques environnementales.

Afin de répondre à ces problématiques, il est possible d'envisager un géotextile réalisé en fibres naturelles, mais l'état de la technique ne comporte pas de procédé permettant de réaliser de tels géotextiles en fibres naturelles qui présentent d'aussi bonnes performances qu'un géotextile de fibres synthétiques.

L'invention a notamment pour but de remédier à cet inconvénient, en proposant un procédé de fabrication d'un géotextile biosourcé, dont les performances sont au moins similaires à celles d'un géotextile synthétique.

A cet effet, l'invention a notamment pour objet un procédé de fabrication d'un géotextile, caractérisé en ce qu'il comporte :
- la fourniture d'une première couche d'un tissé de fibres naturelles,
- la fourniture d'une seconde couche de fibres naturelles,
- la superposition de la première couche sur une bande de convoyage, et de la seconde couche sur la première couche,
- l'hydroliage de la première couche avec la seconde couche, par projection d'eau à haute pression à travers les première et seconde couches.

L'invention est le résultat d'un travail de plus de deux années sur des installations d'essais et avec des laboratoires d'analyse reconnus pour atteindre ce niveau de performances recherchées.

Le procédé selon l'invention utilise les propriétés de la pectine contenue dans les fibres naturelles pour obtenir les performances souhaitées pour le géotextile. Il a notamment été établi par les inventeurs que l'hydroliage est particulièrement efficace lorsqu'il utilise ces propriétés de la pectine.

Avantageusement, le procédé est optimisé en effectuant l'hydroliage dans les meilleures conditions de conservation de la pectine. En particulier, ces conditions correspondent à des conditions techniques de pression et qualité d'eau et de caractéristiques de fibres naturelles correspondant à un itinéraire technique agricole spécifique.

Un procédé de fabrication selon l'invention peut ainsi présenter l'une ou plusieurs des caractéristiques optionnelles suivantes, prises seules ou selon toutes combinaisons techniquement envisageables.
- Le procédé de fabrication comporte la fourniture de deux premières couches de tissé, disposées de part et d'autre de la seconde couche, puis l'hydroliage de ces trois couches.
- Le procédé de fabrication comporte une étape de régulation de la qualité de l'eau utilisée pour l'hydroliage, au cours de laquelle on effectue une régulation de la température, du pH, de la pureté et/ou de la turbidité de l'eau.
- La régulation de la qualité de l'eau comporte au moins l'une des régulations suivantes : - régulation de la température entre 25 et 35 °C ; - régulation du ph entre 6,5 et 7,5 ; - régulation de la pureté pour présenter moins de 1000 unités/ml de bactéries, moins de 2 mg/l de solides en suspension, et/ou pas de particules supérieures à 10µm ; - régulation de la turbidité inférieure à 2 UTN.
- La régulation de la qualité de l'eau comporte à la fois la régulation de la température, du ph, de la pureté et de la turbidité de l'eau.
- La première couche présente un grammage compris entre 70 et 1000 g/m², et la seconde couche présente un grammage compris entre 70 et 1000 g/m².
- La première couche est réalisée en fibres de chanvre, de lin et/ou de jute, et la seconde couche est réalisée en fibres de chanvre, de lin et/ou de jute.
- Le procédé de fabrication comporte une étape de traitement du géotextile, par imprégnation de matières naturelles, telles que le Chitosan ou tout imperméabilisant naturel.

Différents aspects et avantages de l'invention seront mis en lumière dans la description qui va suivre, donnée uniquement à titre d'exemple et faite en se référant aux figures annexées, parmi lesquelles :
[Fig. 1] La figure 1 est une vue schématique en coupe longitudinale d'un dispositif de fabrication pour la mise en œuvre du procédé de fabrication selon un exemple de mode de réalisation de l'invention ;
[Fig. 2] La figure 2 est une vue du dessus du géotextile réalisé par le dispositif de la figure 1.

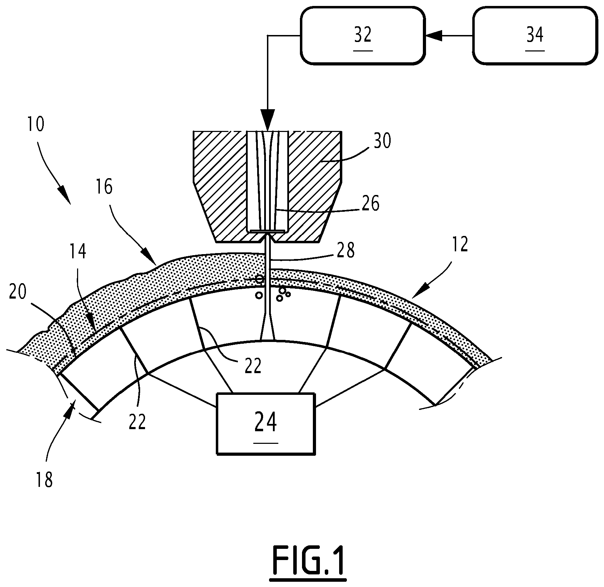

On a représenté, sur la figure 1, un dispositif de fabrication 10 selon un exemple de mode de réalisation de l'invention.

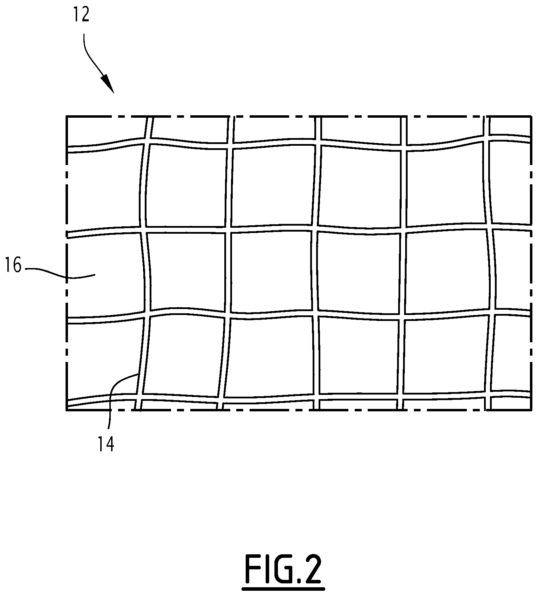

Le dispositif de fabrication 10 est destiné à la mise en œuvre d'un procédé de fabrication d'un géotextile 12 représenté sur la figure 2.

Le géotextile 12 est formé par une première couche 14 d'un tissé de fibres naturelles et une seconde couche 16 d'un non-tissé de fibres naturelles enchevêtrée avec la première couche 14.

De préférence, le non-tissé 16 présente un grammage compris entre 70 et 1000 g/m².

Avantageusement, les fibres naturelles formant le non-tissé 16 sont choisies parmi des fibres de chanvre, de lin et/ou de jute, ou toute autre fibre naturelle envisageable, ou toute combinaison de telles fibres.

Plus particulièrement, les fibres naturelles utilisées pour la réalisation du géotextile 12 sont préférentiellement d'origines végétales, animales et/ou minérales. À titre d'exemple non limitatif, les fibres végétales comportent du chanvre, du lin et/ou du jute, ou tout autre fibre issue de végétaux. À titre d'exemple non limitatif, les fibres animales comportent de la laine et/ou des fibres de kératine. À titre d'exemple non limitatif, les fibres minérales comportent des fibres de basalte, des carbonides ou toute fibre d'origine minérale adaptée. Toute combinaison de fibres naturelles est envisageable.

Le tissé 14 forme par exemple un filet, réalisé par tout procédé de réalisation de tissé connu en soi. Le filet présente un maillage tissé ou tricoté, dont la géométrie est variable en fonction de l'application. De préférence, le tissé 14 présente un grammage compris entre 70 et 1000 g/m².

Avantageusement, les fibres naturelles formant le tissé 14 sont choisies parmi des fibres de chanvre, de lin et/ou de jute, ou toute autre fibre naturelle envisageable, ou toute combinaison de telles fibres.

On notera que, le géotextile étant formé uniquement de fibres naturelles, ce géotextile forme un matériau biosourcé.

Le dispositif de fabrication 10 comporte un dispositif de convoyage 18, destiné à recevoir les première 14 et seconde 16 couches, superposées l'une sur l'autre. Le convoyeur comporte une bande de convoyage 20, sur laquelle sont empilés les première 14 et seconde 16 couches.

La bande de convoyage 20 présente par exemple une largeur supérieure à 4 mètres, pour permettre la réalisation d'une bande de géotextile de largeur environ égale à 4 mètres.

De préférence, la première couche 14 est disposée contre la bande de convoyage 20, et la seconde couche 16 est disposée sur la première couche 14.

Dans l'exemple décrit, le dispositif de convoyage 18 est un rouleau de transport.

Préférentiellement, le dispositif de convoyage 18 comporte des moyens d'aspiration, réalisant une aspiration sur les première 14 et seconde 16 couches, afin de les maintenir l'une contre l'autre, et de les maintenir contre le convoyeur 18. A cet effet, le dispositif de convoyage 18 comporte une pluralité de canaux d'aspiration 22 débouchant au niveau de la bande de convoyage 20. Les canaux d'aspiration 22 sont connectés à un dispositif d'aspiration 24 agencé par exemple sous le dispositif de convoyage 18.

Par exemple, les canaux d'aspiration 22 débouche sous la bande de convoyage 20, la bande de convoyage 20 étant poreuse pour permettre l'aspiration des première 14 et seconde 16 couches.

On notera que, compte tenu du maillage de la première couche 14, l'aspiration n'a généralement pas d'effet sur cette première couche 14. Toutefois, la première couche 14 étant disposée sous la seconde couche 16, cette première couche 14 reste plaquée contre la bande de convoyage 20 par la seconde couche 16, qui est, quant à elle, aspirée.

Le dispositif de fabrication 10 comporte par ailleurs au moins une buse 26 orientée vers la bande de convoyage 20, configurée pour projeter un jet d'eau haute pression vers cette bande de convoyage 20.

Par exemple, la buse 26 est configurée pour projeter un jet d'eau de pression comprise entre 50 et 300 bars.

On notera que la bande de convoyage 20 est suffisamment poreuse pour laisser passer le jet d'eau.

Avantageusement, le dispositif de fabrication 10 comporte une pluralité de buses 26 alignées sur la largeur de la bande de convoyage 20, de manière à former ensemble un voile d'eau 28 à haute pression.

Les buses 26 sont de préférence portées par un support 30 commun.

Avantageusement, le support 30 est mobile en hauteur, afin de permettre l'ajustement de la distance entre les buses 26 et les couches de fibres 14 et 16. L'ajustement de la hauteur permet d'optimiser la qualité de l'hydroliage en fonction des produits à hydrolier (masse surfacique, type de matières) et de la consommation énergétique.

Les buses 26 sont connectées à au moins une pompe haute pression 32, qui alimente ces buses 26 en eau haute pression.

Les buses 26 permettent de réaliser un hydroliage des première 14 et seconde 16 couches de fibres.

La première couche 14 est disposée, sous forme de filet, en amont des buses 26, et la seconde couche 16 est disposée, de préférence sous forme de fibres libres, sur cette première couche 14.

Lorsque l'assemblage des première 14 et seconde 16 couches passe, entrainé par le dispositif de convoyage 18, à travers le voile d'eau sous pression, les fibres de la seconde couche 16 sont hydroliées sous l'effet de l'eau sous pression, en s'enchevêtrant avec le filet de la première couche 14, qui forme ainsi une partie structurelle du géotextile 12.

Afin de permettre une efficacité optimale de l'hydroliage, cet hydroliage est effectué dans des conditions optimales de conservation de la pectine contenue dans les fibres naturelles. En particulier, ces conditions correspondent à des conditions techniques de pression et qualité d'eau et de caractéristiques de fibres naturelles correspondant à un itinéraire technique agricole spécifique. Ceci permet d'obtenir des performances satisfaisantes pour le géotextile.

A cet effet, le dispositif de fabrication 10 selon l'invention comporte un dispositif 34 de régulation de la qualité de l'eau dans lesdites conditions optimales de conservation de la pectine.

Le dispositif 34 de régulation est configuré pour effectuer au moins l'une des régulations suivantes, et de préférence toutes les régulations suivantes :
- une régulation de la température,
- une régulation du pH,
- une régulation de la pureté,
- une régulation de la turbidité.

La température est de préférence régulée entre 25 et 35°C.

La régulation de température est réalisée par apport d'eau tiède.

Le pH est de préférence régulé entre 6.5 et 7.5...

La régulation du pH est réalisée par dosage basique ou acide.

La pureté est de préférence régulée de manière à supprimer les bactéries pour obtenir moins de 1000 unités/ml, et à supprimer les particules de taille inférieure à 10 µm par exemple par filtration à manche. On assure de préférence également moins de 2mg/l de solides en suspension, et une absence de champignons, de levures, de moisissures ou d'algues.

La turbidité est de préférence régulée pour être inférieure à 2 UTN, par exemple par analyse de la turbidité par turbidimètre et influencée par le PH, les matières en suspension donc les dosages de floculent et coagulant.

L'eau est considérée de qualité optimale lorsqu'elle est régulée selon toutes ces conditions.

C'est cette eau de qualité optimale qui est fournie aux pompes 32 puis projetées par les buses 26.

Les fibres, ainsi hydroliées par cette eau dont la qualité permet une conservation de la pectine, permettent la réalisation d'un géotextile de qualité optimale.

Il apparait ainsi que le géotextile 12 réalisé selon l'invention présente une résistance à la traction, telle que définie par la norme (NF EN ISO 13319), comprise entre 0,5 et 10kN/m.

Le géotextile 12 réalisé selon l'invention présente par ailleurs une perméabilité normale au plan, telle que définie par la norme (NF EN ISO 11058), inférieure à 0,09 m/s.

Le géotextile 12 réalisé selon l'invention présente par ailleurs une perforation dynamique, telle que définie par la norme (NF EN ISO 10319), inférieure à 50 mm.

Enfin, le géotextile 12 réalisé selon l'invention présente une durée de vie comprise entre 12 et 60 mois.

Le procédé de fabrication selon l'invention va maintenant être décrit.

Le procédé comporte une étape de fourniture de la première couche 14 de tissé. A cet effet, des fibres naturelles sont tissées, notamment sous forme de filet, au moyen d'un procédé de tissage connu en soi.

La première couche 14 est disposée sur la bande de convoyage 20.

Le procédé comporte une étape de fourniture de la seconde couche 16. Cette seconde couche 16 est fournie sous forme de fibres libres, qui sont disposées sur la première couche 14.

L'assemblage de ces première 14 et seconde 16 couches est maintenu sur la bande de convoyage 20 grâce aux moyens d'aspiration 22, 24.

L'assemblage de ces première 14 et seconde 16 couches est convoyé par la bande de convoyage 20 jusqu'à passer sous les buses 26, qui projettent ensemble un voile d'eau haute pression sur toute la largeur de cet assemblage.

L'eau sous haute pression est projetée en direction de la bande de convoyage 20, passant à travers la seconde couche 16, puis la première couche 14, réalisant ainsi un hydroliage des fibres des première 14 et seconde 16 couches, qui sont ainsi enchevêtrées pour former le géotextile 12.

Les fibres de la seconde couche 16, ainsi liées entre elles, forment également ainsi un non tissé, enchevêtré avec le tissé 14.

Le procédé comporte, en amont de cet hydroliage, le traitement de l'eau à projeter, dans des conditions de conservation optimale de la pectine contenue par les fibres. Il apparait en effet que l'hydroliage est particulièrement efficace lorsqu'il utilise les propriétés de la pectine.

Le procédé comporte ensuite la récupération du géotextile 12 ainsi formé, en sortie de la bande de convoyage 20.

Avantageusement, le procédé comporte une étape de traitement du géotextile, par imprégnation de matières naturelles, telles que le Chitosan ou tout autre imperméabilisant. Ce traitement permet d'augmenter la durée de vie du géotextile.

On notera que l'invention n'est pas limitée au mode de réalisation précédemment décrit.

En particulier, dans une variante, la première couche 14 est superposée sur la seconde couche 16, si bien que le filet d'eau sous pression traverse la première couche avant la seconde couche.

Dans une autre variante, le géotextile est fabriqué en superposant trois couches, à savoir deux premières couches 14 de tissé de part et d'autre d'une seconde couche 16. L'hydroliage permet alors d'enchevêtrer ces trois couches.

## Revendications

1. Procédé de fabrication d'un géotextile (12), **caractérisé en ce qu'**il comporte :
- la fourniture d'une première couche (14) d'un tissé de fibres naturelles,
- la fourniture d'une seconde couche (16) de fibres naturelles,
- la superposition de la première couche (14) sur une bande de convoyage (20), et de la seconde couche (16) sur la première couche (14),
- l'hydroliage de la première couche (14) avec la seconde couche (16), par projection d'eau à haute pression à travers les première et seconde couches.

2. Procédé de fabrication selon la revendication 1, comportant la fourniture de deux premières couches (14) de tissé, disposées de part et d'autre de la seconde couche (16), puis l'hydroliage de ces trois couches.

3. Procédé de fabrication selon la revendication 1 ou 2, comportant une étape de régulation de la qualité de l'eau utilisée pour l'hydroliage, au cours de laquelle on effectue une régulation de la température, du pH, de la pureté et/ou de la turbidité de l'eau.

4. Procédé de fabrication selon la revendication 3, dans lequel la régulation de la qualité de l'eau comporte au moins l'une des régulations suivantes :
- régulation de la température entre 25 et 35 °C ;
- régulation du ph entre 6,5 et 7,5 ;
- régulation de la pureté pour présenter moins de 1000 unités/ml de bactéries, moins de 2 mg/l de solides en suspension, et/ou pas de particules supérieures à 10µm ;
- turbidité inférieure à 2 UTN.

5. Procédé de fabrication selon la revendication 3 ou 4, dans lequel la régulation de la qualité de l'eau comporte à la fois la régulation de la température, du ph, de la pureté et de la turbidité de l'eau.

6. Procédé de fabrication selon l'une quelconque des revendications précédentes, dans lequel la première couche (14) présente un grammage compris entre 70 et 1000 g/m², et la seconde couche (16) présente un grammage compris entre 70 et 1000 g/m².

7. Procédé de fabrication selon l'une quelconque des revendications précédentes, dans lequel les fibres naturelles formant la première couche (14) et/ou les fibres naturelles formant la seconde couche (16) comportent :
- des fibres d'origine végétale, par exemple du chanvre, du lin et/ou du jute ; et/ou
- des fibres d'origine animale, par exemple de la laine et/ou des fibres de kératine ; et/ou
- des fibres d'origine minérale, par exemple des des fibres de basalte et/ou des carbonides.

8. Procédé de fabrication selon l'une quelconque des revendications précédentes, comportant une étape de traitement du géotextile, par imprégnation de matières naturelles, telles que le Chitosan ou tout imperméabilisant naturel.
